# EUROPEAN PATENT SPECIFICATION

(11) **EP 1 961 002 B1**
(45) Date of publication and mention of the grant of the patent: **24.06.2009**
(21) Application number: 06832128.0
(22) Date of filing: 07.12.2006
(51) Int. Cl.: G11B 7/12

(54) **OPTICAL STORAGE INTERFACE APPARATUS, METHOD OF CONTROLLING AN OPTICAL STORAGE INTERFACE**
OPTISCHE SPEICHERSCHNITTSTELLENVORRICHTUNG UND VERFAHREN ZUR STEUERUNG EINER OPTISCHEN SPEICHERSCHNITTSTELLE
INTERFACE DE MEMOIRE OPTIQUE, PROCEDE DE CONTROLE D'UNE INTERFACE DE MEMOIRE OPTIQUE

(30) Priority: 09.12.2005 CN 200510129796
(43) Date of publication of application: 27.08.2008
(73) Proprietor: Koninklijke Philips Electronics N.V., 5621 BA Eindhoven (NL)
(72) Inventor: LEE, Juil, NL-5600 AE Eindhoven (NL)
(74) Representative: Uittenbogaard, Frank
(86) International application number: PCT/IB2006/054644
(87) International publication number: WO 2007/066303

(56) References cited:
- EP-A- 1 262 960
- US-A- 5 140 576
- US-A1- 2003 067 850
- US-A1- 2005 190 666
- ISHIMOTO T ET AL: "Gap Servo System for a Biaxial Device Using an Optical Gap Signal in a Near Field Readout System" JAPANESE JOURNAL OF APPLIED PHYSICS, JAPAN SOCIETY OF APPLIED PHYSICS, TOKYO, JP, vol. 42, no. PART 1, 5A, May 2003 (2003-05), pages 2719-2724, XP002358565 ISSN: 0021-4922

## Description

### FIELD OF THE INVENTION

An aspect of the invention relates to an optical storage interface apparatus.

The optical storage interface apparatus may be, for example, a digital versatile disk (DVD) player, which can read data from a DVD disk, or a DVD recorder, which can also write data onto a DVD disk. The optical storage interface apparatus may comprise, for example, a near-field optical system, which allows high density data readout and storage. Other aspects of the invention relate to a method of controlling an optical storage interface, and a computer program product for an optical storage interface.

### BACKGROUND OF THE INVENTION

The article entitled "High-Density Near-Field Optical Recording with a Solid Immersion Lens, Conventional Actuator, and a Robust Air Gap Servo" by Zijp F. et al., IEEE Transactions on Magnetics, Vol. 41, No. 2, February 2005, pages 1042-1046, describes a near-field optical recording system with a solid immersion lens in a conventional biaxial actuator. A digital servo system drives the conventional biaxial actuator in order to maintain a constant air gap of 25 nm between the solid immersion lens and a spinning optical disk. The digital servo system is started by bringing the lens in an open loop control mode to a position where a gap error signal starts to drop towards zero. When the gap error signal drops below a predefined threshold, a closed loop operation starts with a gap control reference that is given a smooth reference trajectory towards a final value. This mode is called "handover" control. Finally, when the lens reaches the gap reference, a high-gain control system takes over the control.

European patent application EP1262960 A2 discloses an optical disc apparatus, arranged to avoid collision between an objective lens and an optical disc during a layer jump mode, or a high speed seek mode, by retracting the lens when the signal of a shock sensor exceeds a threshold value.

### OBJECT AND SUMMARY OF THE INVENTION

According to an aspect of the invention, an optical storage interface apparatus has the following characteristics.

The optical storage interface apparatus comprises a lens module for forming a light spot on an optical information carrier in response to a light beam that is projected on the lens module. A lens actuator moves the lens module from a rest position, which is relatively distant from the optical information carrier, to a read position, which is relatively close to the optical information carrier. A controller verifies whether the lens module, when moving from the rest position to the read position, has a velocity that is below a velocity threshold or not. If not, the controller causes the lens actuator to pull back the lens module with respect to the optical information carrier.

The invention takes the following aspects into consideration. A lens module should preferably not collide with an optical information carrier from which data is to be read or on which data is to be written, or both, by means of the lens module. A collision between the lens module and the optical information carrier may damage the lens module. A collision may also damage the optical information carrier. In either case, the collision will adversely affect reading of data and writing of data, whichever is applicable, or may even render such reading and writing impossible.

An optical storage interface apparatus generally comprises some form of control system that causes the lens actuator to move the lens module from a rest position, which is relatively distant from the optical information carrier, to a read position, which is relatively close to the optical information carrier. The control system should preferably be designed so that the lens module does not collide with the optical information carrier under normal circumstances. That is, the control system should be sufficiently precise. Moreover, the control system should move the lens module from the rest position to the read position in a relatively short time. That is, the control system should be sufficiently fast in order to provide a user a satisfactory response time. A user generally does not wish to wait for several seconds before the optical storage interface apparatus starts reading data from the optical information carrier or starts writing data on the optical information carrier, whichever applies. Speed and precision are contradictory requirements. Designing the control system may involve a compromise between these two contradictory requirements.

An external disturbance, such as a shock or a vibration, may cause the lens module to collide with the optical information carrier. The control system may cope with an external disturbance of relatively small magnitude. However, the control system will generally not be capable of preventing a collision when the external disturbance has the relatively large magnitude.

There is a particular high risk of collision in near-field optical systems because the lens module is relatively close to the optical information carrier, in particular when the lens module moving towards the read position. A relatively small disturbance may cause a relatively small displacement of the lens module, which is sufficient to cause a collision between the lens module and the optical information carrier. Moreover, the control system will generally suffer from tolerances: the control behavior of the control system may deviate to a certain extent from a desired control behavior for which the control system was designed. Such a deviation may make the control system more sensitive to external disturbances.

The following safety measure may be applied to avoid collision between the lens module and the optical information carrier. The lens module is moved away from the optical information carrier when the lens module has a position that is too close to the optical information carrier. That is, the lens module is moved away when a distance between the lens module and the optical information carrier is below a distance threshold value.

In practice, however, the aforementioned safety measure may not be very effective. The distance threshold value needs to be smaller than the distance that corresponds with the read position. The last mentioned distance may be relatively small, in particular in near-field optical systems. There will be a delay between a detection that the distance is below the distance threshold value and a corrective action that involves moving the lens module away from the optical information carrier. The lens module may have collided with the optical information carrier during this delay because the lens module was already relatively close to the optical information carrier. The medicine arrives too late, as it were.

In accordance with the aforementioned aspect of the invention, a controller verifies whether the lens module, when moving from the rest position to the read position, has a velocity that is below a velocity threshold or not. If not, the controller causes the lens actuator to pull back the lens module with respect to the optical information carrier.

The velocity of the lens module can provide a reliable indication of the risk of collision even when the lens module is relatively far away from the optical information carrier. It is generally possible to establish a maximum velocity below which there is little risk of collision. The maximum velocity may empirically be established by means of measurements. Simulations or calculations are other techniques for establishing the maximum velocity. Since the velocity can provide a reliable indication of the risk of collision at an early stage, it is possible to take a corrective action when the lens module is still relatively far away from the optical information carrier. The lens module still has some distance to traverse before colliding with the optical information carrier when it is detected that the velocity exceeds the maximum velocity. Consequently, there is less risk that the corrective action arrives too late for a given a reaction delay. Accordingly, there is less risk of collision between the lens module and the optical information carrier. For those reasons, the invention allows reliable and robust optical data readout and optical data recording, in particular in near-field systems.

The invention is particularly advantageous when a control system is used that operates in an open loop mode for moving the lens module from the rest position to a handover position, which is between the rest position and the read position, and that subsequently operates in a closed loop mode wherein the lens actuator forms part of a feedback loop, which receives a reference that defines a desired position of the lens module. A switching from the open loop mode to the closed loop mode causes an overshoot: the distance between the lens module and the optical information carrier sharply decreases. The lens module will collide with the optical information carrier when the overshoot is too large. It has been established that the overshoot has a magnitude that depends on the velocity of the lens module; the higher the velocity is, the higher the magnitude is. Since, in accordance with the invention, a corrective action is taken when the velocity exceeds a velocity threshold, it can be prevented that an overshoot occurs with a too high magnitude, which would otherwise cause a collision. Thus, the invention provides an effective manner of preventing collisions when a control system of the aforementioned type is used.

These and other aspects of the invention will be described in greater detail hereinafter with reference to drawings.

### BRIEF DESCRIPTION OF THE DRAWINGS

Fig. 1 is a block diagram that illustrates an optical disk player.
Fig.2 is a block diagram that illustrates an optical reader module, which forms part of the optical disk player.
Fig.3 is a graph that illustrates a gap indication signal and a data signal, which the optical reader module provides.
Fig.4 is a block diagram that illustrates a controller, which forms part of the optical disk player.
Fig.5 is a flow chart that illustrates a lens control program, which the controller carries out.
Fig.6 is a block diagram that illustrates an open control loop, which the controller and the optical reader module constitute when the controller operates in an open loop mode.
Fig.7 is a block diagram that illustrates a hand over control loop, which the controller and the optical reader module constitute when the controller operates in a hand over mode.
Fig.8 is a graph that illustrates a reference value for the hand over control loop, which varies as a function of time.
Fig.9 is a block diagram that illustrates a fixed reference control loop, which the controller and the optical reader module constitute when the controller operates in a fixed reference mode.
Figs.10A and 10B are signal diagrams that illustrate that a lens module within the optical disk player may collide with an optical disk if the lens module approaches the optical disk with a too high velocity.

### DETAILED DESCRIPTION OF THE INVENTION

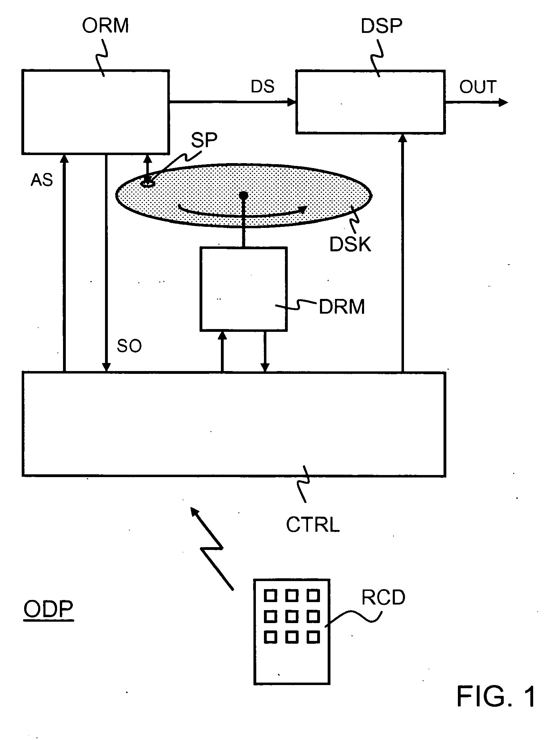

Fig.1 illustrates an optical disk player ODP that is capable of reading an optical disk DSK, which comprises a relatively high density of data. The optical disk player ODP comprises an optical reader module ORM, a data signal processor DSP, a disk-rotation motor DRM, and a controller CTRL. The optical disk player ODP may further comprise a remote control device RCD. The controller CTRL may be in the form of, for example, a programmable processor that comprises a program memory. In that case, one or more software modules, which are stored in the program memory, define operations which the controller CTRL carries out.

The optical disk player ODP basically operates as follows. Let it be assumed that a user presses a play button on the remote control device RCD. The remote control device RCD sends a wireless signal to the controller CTRL. The controller CTRL interprets this wireless signal as a play command and, in response, causes the disk-rotation motor DRM to make the optical disk DSK rotate. The optical reader module ORM applies a light spot SP to the optical disk DSK, which is rotating, so as to read out data that is optically stored on the optical disk DSK. The optical reader module ORM provides a data signal DS that represents this data. The data signal processor DSP processes the data signal DS so as to obtain digital output data OUT in a suitable format. To that end, the data signal processor DSP may carry out various different types processing such as, for example, pulse detection, pulse decoding, and error decoding.

The light spot SP needs to be correctly positioned on the optical disk DSK and needs to be correctly focused in order to achieve satisfactory data readout. In addition, the light spot SP needs to have a relatively small size. The optical reader module ORM provides sensor output signals SO, which indicate the size, the position and the focus of the light spot SP. The sensor output signals SO may indicate other parameters that concern the data readout by means of the light spot SP. The controller CTRL, which receives the sensor output signals SO, establishes whether the light spot SP is sufficiently small and correctly positioned and focused, or not. The controller CTRL applies actuator signals AS to the optical reader module ORM in response to the sensor output signals SO. The actuator signals AS, which the controller CTRL provides, cause the light spot SP to be sufficiently small and have the correct focus and position.

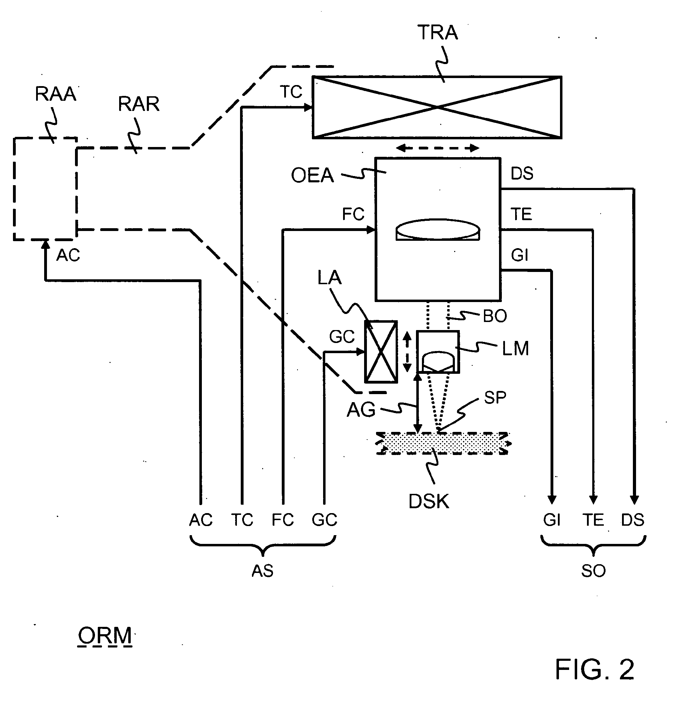

Fig.2 illustrates the optical reader module ORM. The optical reader module ORM comprises a tracking actuator TRA, an optoelectronic assembly OEA, a lens module LM, and a lens actuator LA. The aforementioned elements may form part of a reader arm RAR that is coupled to an arm actuator RAA. The lens actuator LA may comprise one or more permanent magnets and one or more coils. The lens actuator LA may also comprise one or more piezoelectric elements. The same applies to the tracking actuator TRA.

The lens module LM is of the so-called near-field type, which allows the light spot on the optical disk to be relatively small. The lens module LM may comprise, for example, a solid immersion lens as described in, for example, the article mentioned hereinbefore: "High-Density Near-Field Optical Recording with a Solid Immersion Lens, Conventional Actuator, and a Robust Air Gap Servo" by Zijp F. et al., IEEE Transactions on Magnetics, Vol. 41, No. 2, February 2005, pages 1042-1046.

The optical reader module ORM receives the following actuator signals AS from the controller CTRL: an arm control signal AC, a tracking control signal TC, a focus control signal FC, and a gap control signal GC. The optical reader module ORM provides the following sensor signals SO to the controller CTRL: a gap indication signal GI and a tracking error signal TE. The data signal DS may optionally also be regarded as a sensor signal.

The optical reader module ORM basically operates as follows. The arm actuator RAA moves the reader arm RAR, if any, in dependence on the arm control signal AC. Accordingly, the arm control signal AC allows a coarse control of the position of the light spot on the disk. The tracking actuator TRA moves the lens module LM in dependence on the tracking control signal TC. Accordingly, the tracking control signal TC allows a fine control of the position of the light spot SP on the optical disk DSK. It will be assumed hereinafter that the light spot SP is correctly positioned.

The optoelectronic assembly OEA generates an output light beam BO and projects the output light beam BO on the lens module LM. The output light beam BO has a wavelength that lies in, for example, a blue-violet wavelength range. The output light beam BO causes the lens module LM to produce the light spot SP on the optical disk DSK. The optical disk DSK reflects a portion of the light spot SP. This reflection causes a reflected light beam from the lens module LM to the optoelectronic assembly OEA. The optoelectronic assembly OEA derives the data signal DS from the reflected light beam. The optoelectronic assembly OEA further derives the tracking error signal TE and the gap indication signal GI from the reflected light beam.

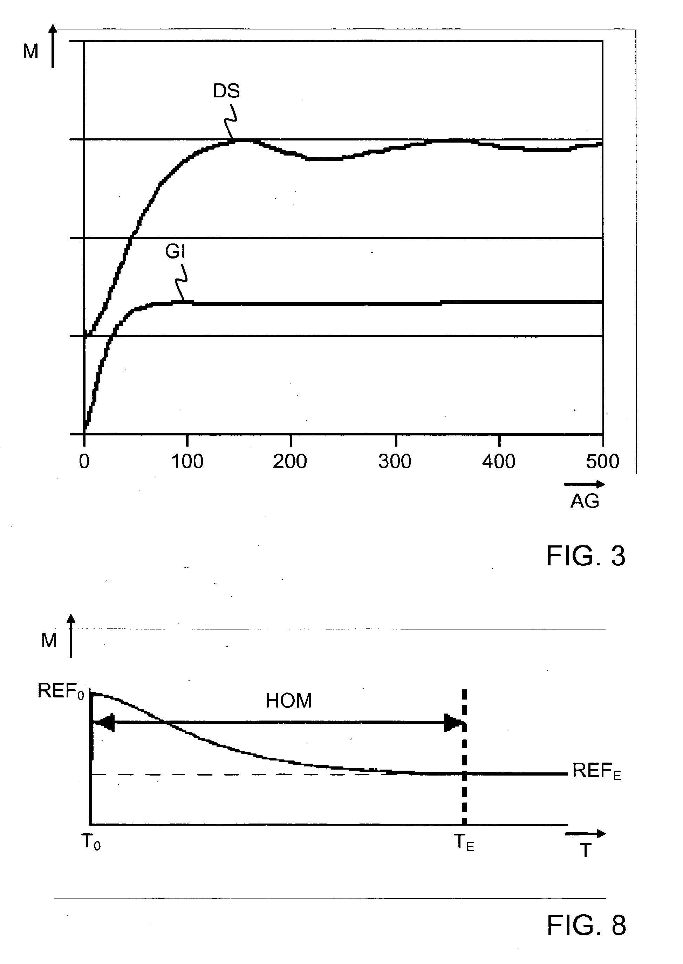

The optoelectronic assembly OEA may operate in a fashion as described in the aforementioned article. Fig.3 of this article illustrates a near-field player setup that has a main branch, and two detection branches. The main branch comprises a blue-violet laser, a collimator lens, beam shaping optics, two beam splitters, and a telescope for focus adjustment. The focus control signal FC may adjust the telescope. The main branch provides the output light beam BO. One detection branch comprises a photodiode designated as "RF//pol.". This RF//pol. photodiode receives a portion of the reflected light beam, which is polarized parallel to the output light beam BO. This portion of the reflected light beam carries a central aperture signal that represents data, which read from the optical disk DSK. Consequently, the RF//pol. photodiode provides the data signal DS. The detection branch further comprises an optoelectronic transducer that provides the tracking error signal TE. The other detection branch comprises a photodiode designated as "RF⊥" that receives a portion of the reflected light beam, which is polarized perpendicular to the output light beam BO. This RF⊥ photodiode provides the gap indication signal GI.

Fig.2 illustrates an air gap AG between the lens module LM and the optical disk DSK. The air gap AG should be relatively small when the optical reader module ORM reads data from the optical disk DSK. The reasons are as follows. It has been mentioned hereinbefore that the lens module LM is of the near-field type. Such a lens module LM makes use of evanescent energy to produce a relatively small light spot on an optical disk DSK. A substantial portion of the evanescent energy from the lens module LM should reach the optical disk DSK. Evanescent energy significantly decays within a few tenths of the wavelength of the output light beam BO. Consequently, the light spot SP on the optical disk DSK can be relatively small only if the air gap AG is less than a few tenths of the wavelength of the output light beam BO. The air gap AG should therefore preferably lie in a range comprised between 10 and 50 nanometers (nm). This range will be referred to hereinafter as near-field range.

The lens actuator LA moves the lens module LM in a direction perpendicular to the optical disk DSK in dependence on the gap control signal GC. Accordingly, the gap control signal GC allows a control of the air gap AG between the lens module LM and the optical disk DSK. The gap control signal GC should bring the lens module LM within the near-field range when the user has pushed the play button as mentioned hereinbefore. What is more, the gap control signal GC should keep the lens module LM within the near-field range when the optical reader module ORM reads data from the optical disk DSK.

Fig.3 illustrates the gap indication signal GI and the data signal DS. Fig.3 is a graph that has a horizontal axis, which represents the air gap AG in units of nanometers. The graph has a vertical axis, which represents signal magnitude M. The graph comprises two curves: one curve represents the gap indication signal GI; the other curve represents the data signal DS. The gap indication signal GI has magnitude that varies as a function of the air gap AG in the near-field range. The magnitude of the gap indication signal GI is substantially constant when the air gap AG is greater than 100 nm.

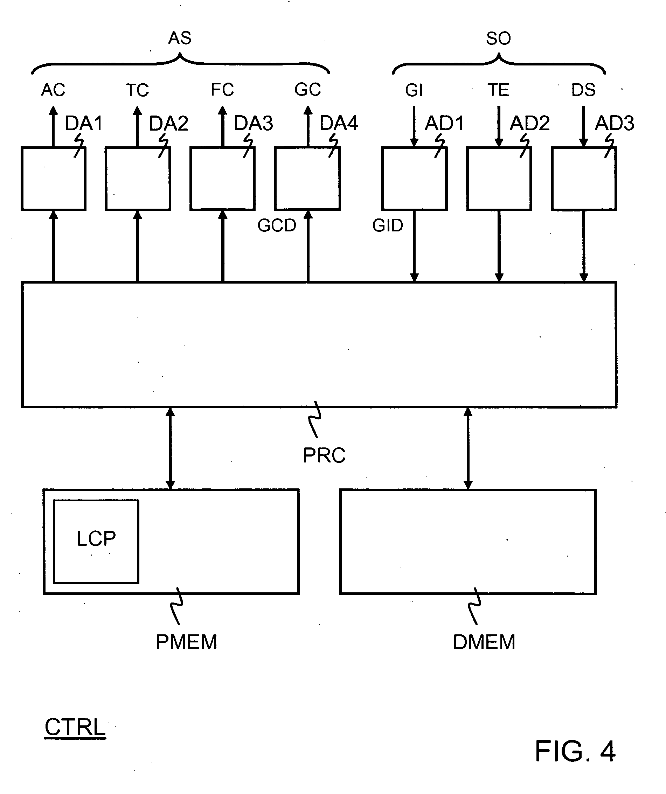

Fig.4 illustrates the controller CTRL. The controller CTRL comprises a processor PRC, a program memory PMEM, and a data memory DMEM. The program memory PMEM comprises a lens control program LCP. The lens control program LCP constitutes a set of instructions, which the processor PRC can execute. The controller CTRL further comprises various digital-to-analog converters DA1, DA2, DA3, DA4, which provide the actuator signals AS to the optical reader module ORM, and various analog-to-digital converters AD1, AD2, AD3, which receive the sensor signals SO from the optical reader module ORM. The processor PRC may comprise various input buffers, which are coupled to the analog-to-digital converters AD1, AD2, AD3, and various output buffers, which are coupled to the digital-to-analog converters DA1, DA2, DA3, DA4. These buffers, which Fig.4 does not illustrate, serve to temporarily store data.

The controller CTRL establishes the gap control signal GC, which is one of the actuator signals AS, on the basis of the gap indication signal GI, which is one of the sensor signals SO. The controller CTRL does so in the following manner. Analog-to-digital converter AD1 periodically takes a sample of the gap indication signal GI and transforms the sample into a digital value. Accordingly, analog-to-digital converter AD1 provides a stream of input digital values GID, which represents the gap indication signal GI, at a sample rate. The sample rate may be, for example, samples per second, which means that analog-to-digital converter AD1 provides a new digital input value each microsecond. An input buffer within the processor PRC may temporarily store the digital input values GID that analog-to-digital converter AD1 provides.

The processor PRC processes the digital input values GID, which represents the gap indication signal GI, in accordance with the lens control program LCP, which is stored in the program memory PMEM. More precisely, the processor PRC executes the lens control program LCP, which causes the processor PRC to process these digital input values. Accordingly, the processor PRC generates digital output values GCD, which an output buffer within the processor PRC may temporarily store. The processor PRC applies the digital output values GCD to digital-to-analog converter DA4 in the form of a stream. This stream represents the gap control signal GC in a digital form. Digital-to-analog converter DA4 provides the gap control signal GC, which is an analog signal, in response to the stream of digital output values GCD, which the processor PRC has generated on the basis of the gap indication signal GI in its digital form.

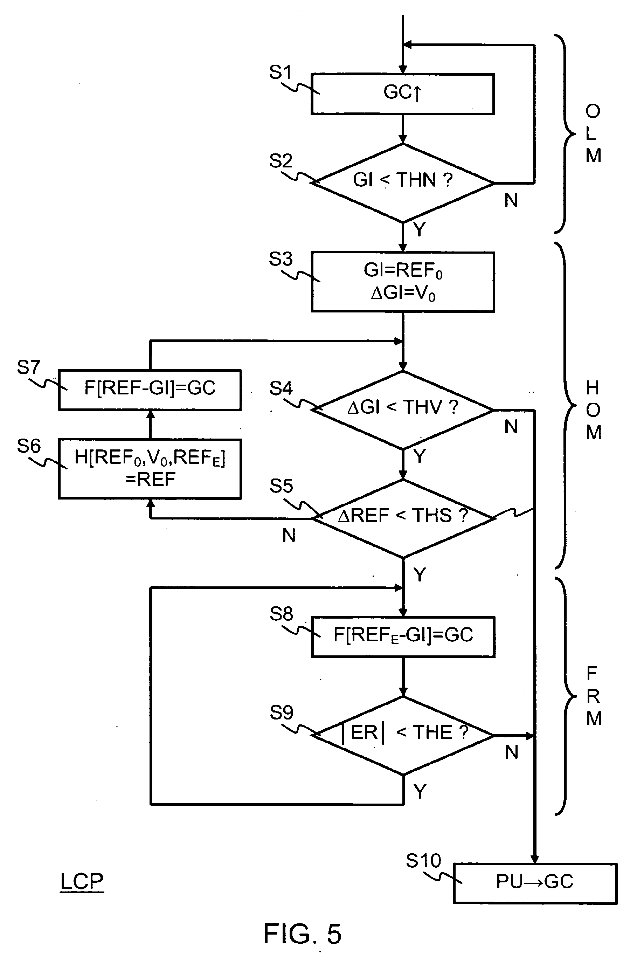

Fig.5 illustrates the lens control program LCP, which comprises various steps S1-S10. The lens control program LCP causes the controller CTRL to bring the lens module LM from a rest position, which is relatively distant from the optical disk DSK, to a read position, which is within the near-field range. Subsequently, the lens control program LCP maintains the lens module LM in the read position, assuming that there are no disturbing effects. The read position may correspond with, for example, the air gap AG being equal to 30 nm. The rest position corresponds with the air gap AG being relatively large, such as, for example, a few hundred micrometers.

The lens control program LCP causes the controller CTRL to traverse three different modes of operation: an open loop mode OLM, a hand over mode HOM, and a fixed reference mode FRM. In the open loop mode OLM, the controller CTRL brings the lens module LM from the rest position to a hand over position that is relatively close to the near-field range or even within the near-field range. The handover position may correspond with, for example, the air gap AG being equal to 70 nm. In the handover mode HOM, the controller CTRL brings the lens module LM from the hand over position to the read position, assuming that there are no disturbing effects. In the fixed reference mode FRM, the controller CTRL maintains the lens module LM in the read position, assuming that there are no disturbing effects. The controller CTRL takes appropriate action if there are disturbing effects, as will be explained hereinafter.

The controller CTRL operates in the open loop mode OLM when the controller CTRL carries out steps S1 and S2. In step S1, the controller CTRL increases the magnitude of the gap control signal GC (GC↑). Referring to Fig.4, the processor PRC may apply a new digital output value GCD to digital-to-analog converter DA4, which is one or more units higher than the digital output value GCD that the processor PRC previously applied to digital-to-analog converter DA4. That is, the digital output value GCD increases by one or more units each time the controller CTRL carries out step S 1. The lens module LM moves closer to the optical disk DSK when the magnitude of the gap control signal GC increases. Consequently, the controller CTRL causes the lens module LM to move a little bit closer to the optical disk DSK each time the controller CTRL carries out step S1.

In step S2, the controller CTRL checks whether the magnitude of the gap indication signal GI below a near-field threshold value THN, or not (GI < THN ?). Referring to Fig.3, the near-field threshold value THN may be equal to, for example, 90% of the magnitude that the gap indication signal GI has when the air gap AG is equal to 100 nm. The lens module LM is relatively close to the near-field range, or has even entered the near-field range, when the magnitude of gap indication signal GI is below the near-field threshold value THN. The air gap AG has a specific value when the magnitude of the gap indication signal GI is equal to the near-field threshold value THN. This specific value corresponds with the aforementioned hand over position.

The controller CTRL carries out step S1 anew when the magnitude of the gap indication signal GI is above the near-field threshold value THN, or equal thereto. In that case, the lens module LM is still relatively far away from the optical disk DSK and has not yet reached the hand over position. The controller CTRL will bring the lens module LM closer to the optical disk DSK by carrying out step S1 anew, as explained hereinbefore. The controller CTRL leaves the open loop mode OLM, which steps S1 and S2 form, when the gap indication signal GI is below the near-field threshold value THN. The controller CTRL enters the handover mode HOM, which will be described hereinafter.

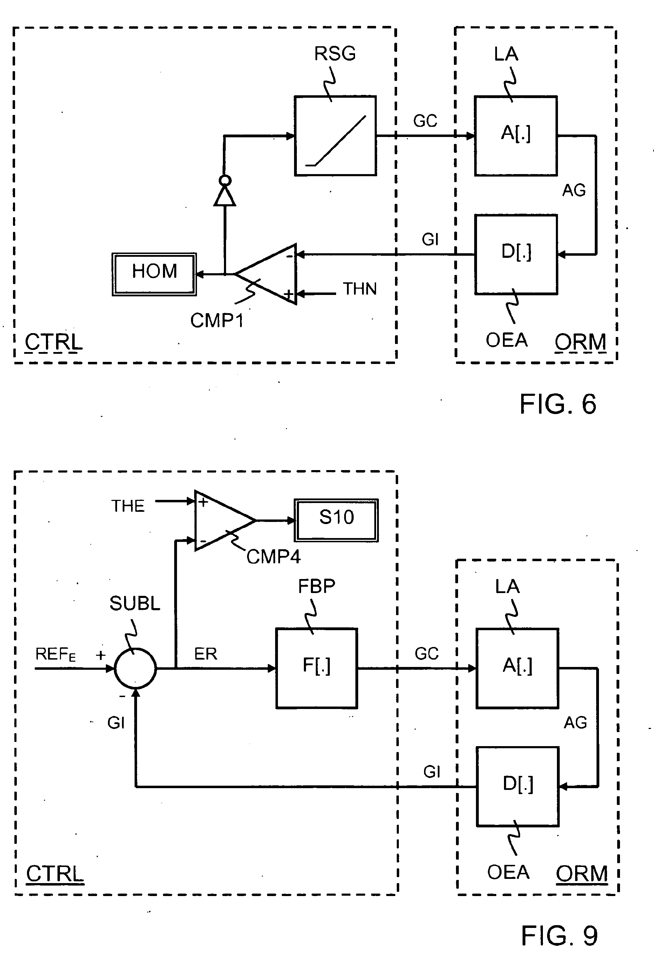

Fig.6 illustrates an open control loop, which the controller CTRL and the optical reader module ORM constitute when the controller CTRL operates in the open loop mode OLM. The controller CTRL provides the following functions in the open loop mode OLM: a ramp signal generator RSG and a comparator CMP 1. The ramp signal generator RSG can be associated with step S1 described hereinbefore. The comparator CMP1 can be associated with step S2 described hereinbefore. The optical reader module ORM comprises the lens actuator LA, which has a lens actuator transfer function A[.], and the optoelectronic assembly OEA, which has a gap detection transfer function D[.].

The ramp signal generator RSG provides the gap control signal GC, which is in the form of a ramp signal. The air gap AG varies with the ramp signal in accordance with the lens actuator transfer function A[.]. The air gap AG decreases in a substantially steady manner as long as the ramp signal generator RSG is active. The gap indication signal G1, which varies with the air gap AG in accordance with the gap detection transfer function D[.], reflects this decrease. The comparator CMP1 compares the gap indication signal GI with the near-field threshold value THN. The comparator CMP1 provides a binary zero (0) when the magnitude of the gap indication signal GI is above the near-field threshold value THN, or equal thereto. The ramp signal generator RSG remains active as long as the comparator CMP1 provides the binary zero (0). The comparator CMP1 provides a binary one (1) when the magnitude of the gap indication signal GI is below the near-field threshold value THN, or equal thereto. In that case, the ramp signal generator RSG is deactivated and the controller CTRL switches to the handover mode HOM.

Referring again to Fig.5, the controller CTRL operates in the handover mode HOM when the controller CTRL carries out steps S3-S7. In the handover mode HOM, the controller CTRL applies a variable reference REF for a closed loop control of the air gap AG. The variable reference REF causes the closed loop control to gently guide, as it were, the lens module LM from the handover position to the read position. Accordingly, the variable reference REF has a value that gradually decreases with time. This will be explained in greater detail hereinafter.

Step S3 constitutes the entry of the handover mode HOM. In step S3, the controller CTRL establishes an initial reference value REF₀ and an initial approach velocity V₀. The initial reference value REF₀ is substantially equal to the gap indication signal GI at the instant when the controller CTRL switches to the handover mode HOM (GI=REF₀). The initial approach velocity V₀ is substantially equal to the first-order derivative ΔGI of the gap indication signal GI at the instant when the controller CTRL switches to the handover mode HOM (ΔGI=V₀). The controller CTRL may calculate the initial approach velocity V₀ by taking the difference between two subsequent digital input values GID that analog-to-digital converter AD1 provides. The sample rate defines an exact time difference between the two subsequent digital input values GID.

Steps S4-S7 constitute a handover control cycle. The controller CTRL will generally carry out steps S4-S7 relatively many times in succession. That is, the controller CTRL will carry out relatively many handover control cycles before leaving the handover mode HOM. The controller CTRL establishes a current value for the variable reference REF in each handover control cycle. The controller CTRL adjusts the lens module LM in accordance with the current value for the variable reference REF. The controller CTRL can exit the handover mode. HOM in a normal manner in step S5 and in an exceptional manner in step S4.

In step S4, the controller CTRL checks whether the following condition is true or false: the first-order derivative ΔGI of the gap indication signal GI is below a velocity threshold value THV (ΔGI < THV ?). The controller CTRL considers that the lens module LM approaches the optical disk DSK with a too high velocity when the aforementioned condition is false. An external disturbance due to, for example, shock or vibration may cause a too high velocity. The controller CTRL considers that the lens module LM is no longer under control in the sense that the closed loop control can provide an appropriate corrective action. There is a risk that the lens module LM collides with the optical disk DSK due to the too high velocity. In order to prevent such a collision, the controller CTRL carries out step S10, which provides an appropriate corrective action. Step S 10 will be described in greater detail hereinafter.

Conversely, the controller CTRL considers that the lens module LM safely approaches the optical disk DSK when the aforementioned condition is true. There is little risk that The lens module LM will collide with the optical disk DSK. The controller CTRL remains in the handover mode HOM and carries out step S5 subsequently.

In step S5, the controller CTRL establishes a difference ΔREF between the variable reference REF and a final reference value REF_{E}. The final reference value REF_{E} is so that when this value is applied to the closed loop control, the closed loop control brings or maintains the lens module LM in the read position, whichever applies.

In step S5, the controller CTRL checks whether the following condition is true or false: the difference ΔREF between the variable reference REF and the final reference value REF_{E} is below a significance threshold THS (ΔREF < THS ?). The controller CTRL considers that the lens module LM is sufficiently close to the read position when the aforementioned condition is true. In that case, the controller CTRL leaves the handover mode HOM, which steps S3-S7 form. The controller CTRL enters the fixed reference mode FRM, which will be described in greater detail hereinafter. Conversely, the controller CTRL considers that the lens module LM is not sufficiently close to the read position when the aforementioned condition is false. In that case, the controller CTRL carries out steps S6 and S7.

In step S6, the controller CTRL calculates the current value for the variable reference REF on the basis of the initial reference value REF₀, the initial approach velocity V₀, and a final reference value REF_{E} (H[REF₀,V₀,REF_{E}] = REF). The final reference value REF_{E} is so that when this value is applied to the closed loop control, the closed loop control brings or maintains the lens module LM in the read position, whichever applies. The controller CTRL calculates the current value for the variable reference REF in accordance with a handover control function H[.]. The handover control function H[.] provides a suitable transition from the initial reference value REF₀ to the final reference value REF_{E}. To that end, the handover control function H[.] may be, for example, a second order function in the so-called z-domain.

In step S7, the controller CTRL controls the lens module LM on the basis of the gap indication signal GI and the current value for the variable reference REF, which will be referred to as current reference value REF hereinafter (F[REF-GI]=GC). The controller CTRL controls the lens module LM in accordance with a lens control function F[.]. The controller CTRL applies the lens control function F[.] to a difference between the current reference value REF and the gap indication signal GI. Accordingly, the gap control signal GC varies with the aforementioned difference in accordance with the lens control function F[.].

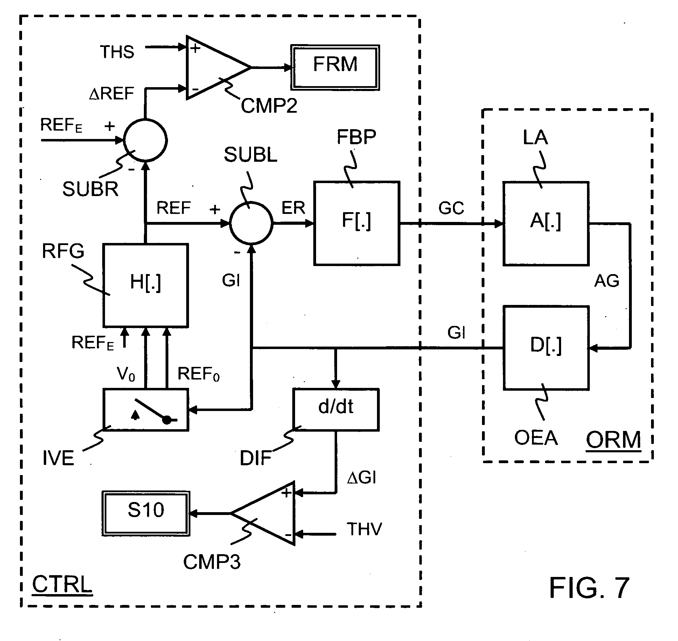

Fig.7 illustrates a handover control loop, which the controller CTRL and the optical reader module ORM constitute when the controller CTRL operates in the handover mode HOM. Fig.7 illustrates the optical reader module ORM in the same fashion as in Fig.6.

The controller CTRL provides the following functions in the handover mode HOM: an initial value extractor IVE, a reference generator RFG, a loop subtractor SUBL, and a feedback processor FBP. The initial value extractor IVE can be associated with step S3 described hereinbefore. The reference generator RFG, which provides the handover control function H[.], can be associated with step S6 described hereinbefore. The loop subtractor SUBL and the feedback processor FBP, which provides the lens control function F[.], can be associated with step S7 described hereinbefore. The controller CTRL further provides the following functions in the handover mode HOM: a reference subtractor SUBR, a differentiator DIF, and two comparators CMP2, CMP3. The differentiator DIF and comparator CMP3 can be associated with step S4 described hereinbefore. The reference subtractor SUBR and comparator CMP2 can be associated with step S5 described hereinbefore.

The initial value extractor IVE extracts the initial reference value REF₀ and the initial approach velocity V₀ on the basis of the gap indication signal GI when the controller CTRL switches from the open loop mode OLM to the handover mode HOM. The comparator CMP1, which Fig.6 illustrates, may activate the initial value extractor IVE. The initial value extractor IVE can be regarded as a sample-and-hold circuit that samples the magnitude of the gap indication signal GI and the first-order derivative ΔGI of this signal at the instant when the controller CTRL switches from the open loop mode OLM to the handover mode HOM. The reference generator RFG applies the handover control function H[.] to the initial reference value REF₀, the initial approach velocity Vo, and the final reference value REF_{E} so as to obtain the variable reference REF.

The loop subtractor SUBL subtracts the gap indication signal GI from the variable reference REF so as to obtain a control error signal ER. The feedback processor FBP applies the lens control function F[.] to the control error signal ER so as to obtain the gap control signal GC. The loop subtractor SUBL, the feedback processor FBP, the lens actuator LA, and the optoelectronic assembly OEA constitute a feedback loop. The feedback loop controls the air gap AG so that the gap indication signal GI is substantially equal to the variable reference REF at any given instant, unless there are disturbing effects. Consequently, the variable reference REF substantially determines the air gap AG in the handover mode HOM. A given value of the variable reference REF corresponds to a specific magnitude of the air gap AG.

Fig.8 illustrates the variable reference REF. Fig.8 is a graph that has a horizontal axis, which represents time T, and a vertical axis, which represents magnitude M. The controller CTRL enters into the handover mode HOM at instant To and leaves the handover mode HOM at instant T_{E}. The variable reference REF is substantially equal to the initial reference value REF₀ at instant T₀. The initial reference value REF₀ corresponds with the handover position mentioned hereinbefore. The variable reference REF is substantially equal to the final reference value REF_{E} at instant T_{E}. The final reference value REF_{E} corresponds with the read position mentioned hereinbefore. Fig.8 illustrates a suitable curve for the variable reference REF between the aforementioned instants. The air gap AG will follow a similar curve when the lens module LM moves from the handover position to the read position. The handover control function H[.] substantially defines the curve.

Referring to Fig.7 again, the differentiator DIF provides the first-order derivative ΔGI of the gap indication signal GI. Comparator CMP3 compares the first-order derivative ΔGI of gap indication signal G1 with the velocity threshold value THV. Comparator CMP3 provides a binary one (1) if the first-order derivative ΔGI of the gap indication signal GI is above the velocity threshold value THV, or equal thereto. In that case, the lens module LM approaches the optical disk DSK with a too high velocity as explained hereinbefore. The controller CTRL takes a corrective action. The corrective action involves carrying out step S10.

The reference subtractor SUBR subtracts the variable reference REF from the final reference value REF_{E} so as to obtain the difference ΔREF between the variable reference REF and the final reference value REF_{E}. Comparator CMP2 compares this difference ΔREF with a significance threshold value THS. Comparator CMP2 provides a binary one (1) if the difference is below the significance threshold value THS. In that case, the lens module LM is sufficiently close to the read position as explained hereinbefore. The controller CTRL switches to the fixed reference mode FRM.

Referring again to Fig.5, the controller CTRL operates in the fixed reference mode FRM when the controller CTRL carries out steps S8 and S9. In step S8, the controller CTRL controls the lens module LM on the basis of the gap indication signal GI and the final reference value REF_{E} (F[REF_{E}-GI]=GC). The controller CTRL controls the lens module LM in accordance with the lens control function F[.], which the controller CTRL already applied in the handover mode HOM. In the fixed reference mode FRM, the controller CTRL applies the lens control function F[.] to a difference between the final reference value REF_{E} and the gap indication signal GI. Accordingly, the gap control signal GC varies with the aforementioned difference in accordance with the lens control function F[.].

In step S9, the controller CTRL checks whether the following condition is true or false: the control error signal ER has an absolute value that is below an error threshold value THE (|ER|< THE ?). The controller CTRL carries out step S8 anew when the aforementioned condition is true. In that case, the controller CTRL considers that the lens module LM is sufficiently close to the read position. In other words, the lens module LM is under control. The controller CTRL remains in the fixed reference mode FRM.

Conversely, the controller CTRL considers that the lens module LM is relatively remote from the read position when the aforementioned condition is false. An external disturbance due to, for example, shock or vibration may have caused such a displacement. The controller CTRL considers that the lens module LM is no longer under control in the sense that the closed loop control can provide an appropriate corrective action. There is a risk that the lens module LM will collide with the optical disk DSK. In order to prevent such a collision, the controller CTRL carries out step S10, which provides an appropriate corrective action.

Fig.9 illustrates a fixed reference control loop, which the controller CTRL and the optical reader module ORM constitute when the controller CTRL operates in the fixed reference mode FRM. Fig.9 illustrates the optical reader module ORM in the same fashion as in Figs.6 and 7. The controller CTRL provides the loop subtractor SUBL and the feedback processor FBP. These two functions are identical to those in the handover control loop, which Fig.7 illustrates. A difference is that the loop subtractor SUBL receives the final reference value REF_{E} in the fixed reference control loop, whereas the loop subtractor SUBL receives the variable reference REF in the handover control loop. The loop subtractor SUBL and the feedback processor FBP can be associated with step S8 illustrated in Fig.5. The controller CTRL further provides the following function: a comparator CMP4. The comparator CMP4 can be associated with step S9.

The loop subtractor SUBL, the feedback processor FBP, the lens actuator LA, and the optoelectronic assembly OEA constitute a feedback loop. The feedback loop controls the air gap AG so that the gap indication signal GI is substantially equal to the final reference value REF_{E}, unless there are disturbing effects. It has been mentioned hereinbefore that the final reference value REF_{E} corresponds with the read position. Consequently, the feedback loop that Fig.9 illustrates seeks to maintain the lens module LM in the read position, which may correspond with the air gap AG being, for example, 30 nm.

The comparator CMP4 compares the control error signal ER, which the loop subtractor SUBL provides, with the error threshold value THE. The comparator CMP4 provides a binary one (1) if the absolute value of the control error signal ER is above the error threshold value THE, or equal thereto. In that case, the lens module LM has a position that deviates too much from the read position. The controller CTRL takes a corrective action. The corrective action involves carrying out step S10.

In step S10, the controller CTRL increases the air gap AG to a significant extent. The controller CTRL pulls back, as it were, the lens module LM with respect to the optical disk DSK. This prevents the lens module LM from colliding with the optical disk DSK. The controller CTRL may pull back the lens module LM in various different manners. For example, the controller CTRL may cause a pulse to appear in the gap control signal GC (PU->GC). The pulse has a sign that causes the lens module LM to move away from the optical disk DSK. The lens actuator transfer function A[.] determines how the air gap AG varies in response to the pulse. Accordingly, the aforementioned pulse is given a shape and a duration that results in an appropriate pull-back action given the lens actuator transfer function A[.].

Step S10 constitutes a safety measure that prevents the reader module from colliding with the optical disk DSK. At least two events may invoke step S10. One event is that the lens module LM is too far away from the read position in the fixed reference mode FRM. This event is position based. Step S8, which has been described hereinbefore, detects such a position based event. The other event that may invoke step S10 is that the lens module LM approaches the optical disk DSK too fast in the handover mode HOM. This event is velocity based. Step S4, which has been described hereinbefore, detects such a velocity based event.

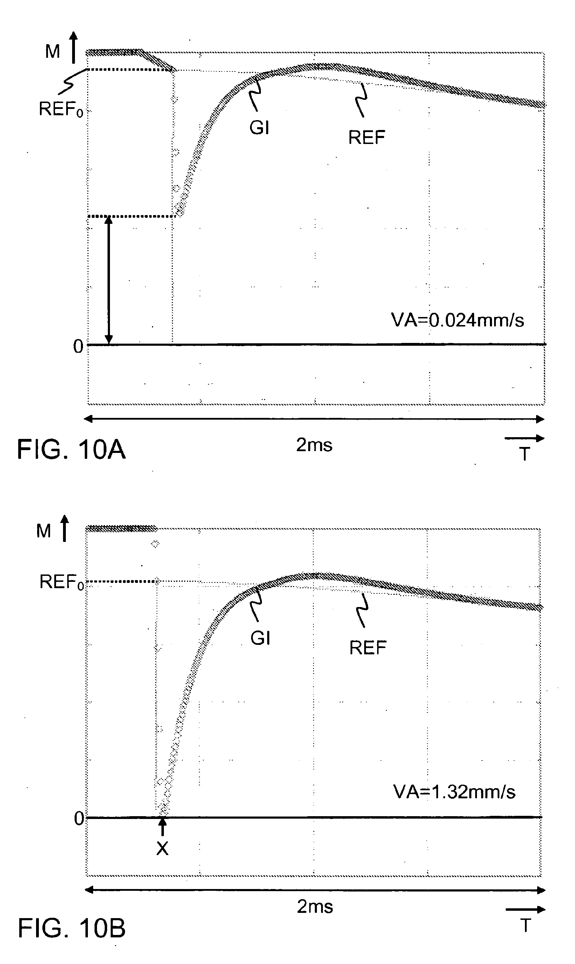

Figs.10A and 10B illustrate that the lens module LM may collide with the optical disk DSK if the lens module LM approaches the optical disk DSK with a too high velocity. Fig. 10A and 10B are graphs that have a horizontal axis, which represents time T, and a vertical access that represents magnitude M. Each graph comprises two curves: one curve formed by circles and another curve formed by a relatively thin solid line. The first mentioned curve represents the gap indication signal GI, which indicates the air gap AG. A circle of this curve can be associated with a sample of the gap indication signal GI for which analog-to-digital converter illustrated in Fig.4 provides a digital input value GID. The curve that is in the form of a relatively thin solid line represents the variable reference REF. Each graph further comprises a horizontal line for which the magnitude is 0. The air gap AG is equal to 0 at this horizontal line. Consequently, the horizontal line represents a surface of the optical disk DSK that faces the lens module LM.

Figs.10A and 10B each illustrate a simulation result that applies when no special measures are taken to prevent the lens module LM from colliding with the optical disk DSK. It is as if the controller CTRL were to carry out the lens control program LCP that Fig.5 illustrates without step S4. At a given instant, the variable reference REF jumps from zero (0) to a particular magnitude, which is the initial reference value REF₀. The controller CTRL switches from the open loop mode OLM to the handover mode HOM at that instant. That is, the controller CTRL operates in the open loop mode OLM before the aforementioned jump of the variable reference REF and operates in the handover mode HOM after the jump.

In Figs.10A and 10B, the curve that represents the gap indication signal GI begins, when going from the left to the right, with a left-hand portion that is substantially flat. This is because the air gap AG has a value for which the gap indication signal GI has a substantially constant magnitude, which Fig.3 illustrates. For example, the magnitude of the gap indication signal GI will remain substantially constant when the air gap AG decreases from 110 nm to 100 nm. The air gap AG is still well above the near-field threshold value.THN in the aforementioned left-hand portion of the curve, in which the gap indication signal GI has a constant high magnitude.

Fig.10A illustrates what happens if the lens module LM approaches the optical disk DSK with a velocity of 0.024 mm/s. This is a moderate velocity. Referring to Fig.3, the lens module LM moves on the horizontal axis from the right to the left with a relatively small step between two successive samples that are taken from the gap indication signal GI in the open loop mode OLM. Consequently, it takes several samples for the magnitude of the gap indication signal GI to decrease from the constant high magnitude to the near-field threshold value THN, which causes a switching to the handover mode HOM.

The switching to the handover mode HOM causes an overshoot. The magnitude in the gap indication signal GI suddenly drops. This sudden drop corresponds with a sudden decrease of the air gap AG. The lens module LM comes relatively close to the optical disk DSK but there is no collision. The air gap AG increases after the sudden drop so as to follow a trajectory, which the variable reference REF defines.

Fig.10B illustrates what happens if the lens module LM approaches the optical disk DSK with a velocity of 1.32 mm/s. This is a relatively high velocity. Referring to Fig.3, the lens module LM moves on the horizontal axis from the right to the left with a relatively big step between two successive samples that are taken from the gap indication signal GI in the open loop mode OLM. Consequently, it takes two samples only for the gap indication signal GI to decrease from the constant high magnitude to the near-field threshold value THN, which causes a switching to the handover mode HOM.

The switching to the handover mode HOM causes a significant overshoot. The magnitude of the gap indication signal GI drops to zero (0). The air gap AG becomes zero (0), which is indicated by a small arrow and the sign "X". The lens module LM hits the optical disk DSK at this point. There is a collision.

Fig.10B illustrates that there is a relatively large magnitude difference between two successive samples when the gap indication signal GI drops to zero (0). This means that the lens module LM momentarily has a relatively high velocity, which is characteristic for the collision that is to follow. Step S4 in the lens control program LCP, which Fig.5 illustrates, detects such a prelude to a collision.

The detailed description hereinbefore with reference to the drawings illustrates the following characteristics, which are cited in various independent claims. An optical storage interface apparatus (ODP) comprises a lens module (LM) for forming a light spot (SP) on an optical information carrier (DSK) in response to a light beam (BO) that is projected on the lens module (LM). A lens actuator (LA) moves the lens module (LM) from a rest position, which is relatively distant from the optical information carrier (DSK), to a read position, which is relatively close to the optical information carrier (DSK). A controller (CTRL) verifies whether the lens module (LM), when moving from the rest position to the read position, has a velocity that is below a velocity threshold (THV) or not. If not, the controller (CTRL) causes the lens actuator (LA) to pull back the lens module (LM) with respect to the optical information carrier (DSK).

The detailed description hereinbefore further illustrates various optional characteristics, which are cited in the dependent claims. These characteristics may be applied to advantage in combination with the aforementioned characteristics. Various optional characteristics are highlighted in the following paragraphs. Each paragraph corresponds with a particular dependent claim.

An optoelectronic assembly (OEA) provides a sensor signal (GI) representative of an air gap (AG) between the lens module (LM) and the optical information carrier (DSK). The controller (CTRL) estimates the velocity of the lens module (LM) on the basis of the sensor signal (GI). This set of characteristics allows low-cost implementations because the sensor signal can be used for a closed loop control of the lens module as well as a velocity measurement.

The optoelectronic assembly (OEA) provides the sensor signal (GI) on the basis of reflected light from the optical information carrier (DSK) that has a polarization perpendicular to the light beam (BO) that is projected on the lens module (LM) for forming the light spot (SP). This characteristic allows a relatively precise velocity measurement.

The controller (CTRL) comprises an analog-to-digital converter (AD1) that provides a stream of digital input values (GID) in response to the sensor signal (GI). A processor (PRC) estimates the velocity of the lens module (LM) on the basis of a difference between two digital input values (GID) established at different instants. This set of characteristics allows low-cost implementations that provide a relatively precise velocity measurement.

The controller (CTRL) operates in an open loop mode (OLM) in which the controller (CTRL) causes the lens actuator (LA) to move the lens module (LM) from the rest position to a handover position, which is between the rest position and the read position. The controller (CTRL) subsequently operates in a closed loop mode (HOM, FRM) in which the controller (CTRL) and the lens actuator (LA) form part of a feedback loop, which receives a reference (REF) that defines a desired position of the lens module (LM). This set of characteristics allows bringing the lens module to the read position in a relatively reliable and fast manner.

The controller (CTRL) sets the reference (REF) at an initial value (REF₀) when the controller (CTRL) switches from the open loop mode (OLM) to the closed loop mode (HOM, FRM). The controller (CTRL) gradually brings the reference (REF) to a final value (REF_{E}) during a handover period. The initial value (REF₀) defines a desired position that is between the handover position and the read position. The final value (REF_{E}) defines a desired position that corresponds with the read position. This set of characteristics contributes to bringing the lens module to the read position in a relatively reliable and fast manner.

The controller (CTRL) varies the reference (REF) in accordance with a handover function (H[.]) on the basis of a measured position (GI) and a measured velocity (ΔGI) of the lens module (LM) when the controller (CTRL) switches from the open loop mode (OLM) to the closed loop mode (HOM, FRM). This set of characteristics contributes to bringing the lens module to the read position in a relatively reliable and fast manner.

The controller (CTRL) verifies whether an absolute difference between the reference (REF) and a signal (GI) that is representative of an air gap (AG) between the lens module (LM) and the optical information carrier (DSK), is below an error threshold (THE). If not, the controller (CTRL) causes the lens actuator (LA) to pull back the lens module (LM) with respect to the optical information carrier (DSK). This set of characteristics further contributes to preventing a collision between the lens module and the optical information carrier.

The lens module (LM) comprises a solid immersion lens. This allows high-density data readout and data recording.

The aforementioned characteristics can be implemented in numerous different manners. In order to illustrate this, some alternatives are briefly indicated.

The aforementioned characteristics may be applied to advantage in any type of product or method that relates to optical data storage. An optical disk player is merely an example. The aforementioned characteristics may equally be applied in, for example, an optical disk recorder, which may also read data from an optical disk. Referring to Fig.2, the optoelectronic assembly OEA may produce a relatively high-power laser light beam so as to alter a physical property on the optical disk DSK.

The lens module can be implemented in numerous different manners. The detailed description provides an example in which the lens module comprises a solid immersion lens. Alternatively, the lens module may comprise a solid immersion mirror. Aperture probes have also been proposed for near-field optical systems.

The lens actuator can be implemented in numerous different manners. For example, the lens actuator may move the lens module by varying a magnetic field. To that end, the lens actuator may comprise one or more permanent magnets and one or more coils. As another example, the lens actuator may move the lens module by means of a piezoelectric effect.

The controller can be implemented in numerous different manners. The detailed description provides an example in which the controller comprises a suitably programmed processor. This is a software-based implementation: software causes the controller to carry out operations in accordance with the invention. Alternatively, the controller may comprise one or more a dedicated circuits, which may be analog or digital, or both. For example, the functions of the controller, which Fig.7 illustrates, may be implemented by means of one or more dedicated circuits. This is a hardware-based solution: circuit elements and connections between these circuit elements define operations in accordance with the invention.

There are numerous different manners to measure or estimate the velocity of the lens module. The detailed description provides an example in which the velocity is measured by means of reflected light from the optical information carrier. Another manner of measuring the velocity is to provide the lens module or the lens actuator with a specific sensor, such as, for example, an accelerometer that is implemented on a semiconductor chip.

In the example, which the detailed description provides, the first-order derivative ΔGI of the gap indication signal GI is representative of the velocity of the lens module. The velocity may also be estimated from the data signal DS. Figure 3 illustrates that the magnitude of the data signal DS also varies with the air gap AG between the lens module and the optical disk. However, data that is read from the optical disk will cause variations in the magnitude of the data signal DS. These variations may disturb a velocity measurement based on the data signal DS. In order to prevent such a disturbance, the controller may cause the tracking actuator TRA and the reader arm actuator RAA to position the optical reader module ORM, which Fig.2 illustrates, so that the light spot SP is first projected on an unwritten portion of the optical disk DSK, which is free of any data. The controller then carries out the lens control program LCP, which Fig.5 illustrates. This brings the lens module in the read position. The controller then positions the optical reader module so that the light spot is projected on a written portion of the optical disk, which comprises data.

As another example, the velocity of the lens module may be estimated on the basis of the initial reference value REF₀, which is established in step S3 of the lens control program LCP that Fig.5 illustrates. In general it holds that the higher the velocity of the lens module is when the lens control program switches from the open loop mode to the handover mode, the lower the initial reference value REF₀ is. Fig.10A and 10B clearly illustrate this. In Fig.10A, the velocity of the lens module is relatively modest whereas in Fig.10B the velocity is relatively high. The initial reference value REF₀ is higher in Fig.10A than in Fig.10B. It is possible to define a velocity-related threshold for the initial reference value REF₀. The lens module has a too high velocity when the initial reference value REF₀ is below the velocity-related threshold. In that case, the lens module is pulled back so as to prevent a collision, which corresponds with step S10 in Fig.5. Referring to Fig.5, step S4 may be modified so that an indirect velocity check is carried out on the basis the initial reference value REF₀. Such an indirect velocity check may replace a direct velocity check, which has been described in the detailed description with reference to step S4. Alternatively, step S4 may be modified so that the indirect velocity check is added to the direct velocity check so as to achieve even greater reliability.

There are numerous different manners for moving the lens module from the rest position to the handover position. The detailed description describes an example in which a ramp signal is used, which establishes a substantially linear movement from the rest position towards the handover position. Any other type of movement may be used to bring the lens module to the handover position. For example, the controller may apply a sinusoidal signal with increasing amplitude to the lens actuator, which establishes a swing movement that steadily becomes stronger until the lens module reaches the handover position. This will substantially coincide with an extremity of the swing movement. The velocity of the lens module is substantially equal to zero at an extremity of the swing movement. Consequently, the lens module will generally have a relatively moderate velocity when reaching the handover position.

The term "velocity" should be interpreted broadly. The term covers any kind of measure of a rate of displacement. For example, acceleration is a measure of a rate of displacement. The term "velocity" thus covers acceleration.

There are numerous ways of implementing functions by means of items of hardware or software, or both. In this respect, the drawings are very diagrammatic, each representing only one possible embodiment of the invention. Thus, although a drawing shows different functions as different blocks, this by no means excludes that a single item of hardware or software carries out several functions. Nor does it exclude that an assembly of items of hardware or software or both carry out a function.

The remarks made herein before demonstrate that the detailed description with reference to the drawings, illustrate rather than limit the invention. There are numerous alternatives, which fall within the scope of the appended claims. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps.

## Claims

1. An optical storage interface apparatus (ODP) comprising:
- a lens module (LM) for forming a light spot (SP) on an optical information carrier (DSK) in response to a light beam (BO) that is projected on the lens module (LM) ;
- a lens actuator (LA) for moving the lens module (LM) from a rest position, which is relatively distant from the optical information carrier (DSK), to a read position, which is relatively close to the optical information carrier (DSK);
the optical storage interface apparatus being **characterised in that** it further comprises:
- a controller (CTRL) arranged to verify whether the lens module (LM), when moving from the rest position to the read position, has a velocity that is below a velocity threshold (THV) or not and, if not, to cause the lens actuator (LA) to pull back the lens module (LM) with respect to the optical information carrier (DSK).

2. An optical storage interface apparatus (ODP) according to claim 1, the optical storage interface comprising an optoelectronic assembly (OEA) arranged to provide a sensor signal (GI) representative of an air gap (AG) between the lens module (LM) and the optical information carrier (DSK), the controller (CTRL) being arranged to estimate the velocity of the lens module (LM) on the basis of the sensor signal (GI).

3. An optical storage interface apparatus (ODP) according to claim 2, the optoelectronic assembly (OEA) being arranged to provide the sensor signal (GI) on the basis of reflected light from the optical information carrier (DSK) that has a polarization perpendicular to the light beam (BO) that is projected on the lens module (LM) for forming the light spot (SP).

4. An optical storage interface apparatus (ODP) according to claim 2, the controller (CTRL) comprising:
- an analog-to-digital converter (AD1) coupled to provide a stream of digital input values (GID) in response to the sensor signal (GI); and
- a processor (PRC) arranged to estimate the velocity of the lens module (LM) on the basis of a difference between two digital input values (GID) established at different instants.

5. An optical storage interface apparatus (ODP) according to claim 1, the controller (CTRL) being arranged to operate in an open loop mode (OLM) in which the controller (CTRL) causes the lens actuator (LA) to move the lens module (LM) from the rest position to a handover position, which is between the rest position and the read position, and being arranged to subsequently operate in a closed loop mode (HOM, FRM) in which the controller (CTRL) and the lens actuator (LA) form part of a feedback loop, which receives a reference (REF) that defines a desired position of the lens module (LM).

6. An optical storage interface apparatus (ODP) according to claim 5, the controller (CTRL) being arranged to set the reference (REF) at an initial value (REF₀) when the controller (CTRL) switches from the open loop mode (OLM) to the closed loop mode (HOM, FRM), and to gradually bring the reference (REF) to a final value (REF_{E}) during a handover period, the initial value (REF₀) defining a desired position that is between the handover position and the read position, the final value (REF_{E}) defining a desired position that corresponds with the read position.

7. An optical storage interface apparatus (ODP) according to claim 6, the controller (CTRL) being arranged to vary the reference (REF) in accordance with a handover function (H[.]) on the basis of a measured position (GI) and a measured velocity (ΔGI) of the lens module (LM) when the controller (CTRL) switches from the open loop mode (OLM) to the closed loop mode (HOM, FRM).

8. An optical storage interface apparatus (ODP) according to claim 6, the controller (CTRL) being arranged to verify whether an absolute difference between the reference (REF) and a signal (GI) that is representative of an air' gap (AG) between the lens module (LM) and the optical information carrier (DSK), is below an error threshold (THE) and, if not, to cause the lens actuator (LA) to pull back the lens module (LM) with respect to the optical information carrier (DSK).

9. An optical storage interface apparatus (ODP) according to claim 1, wherein the lens module (LM) comprises a solid immersion lens.

10. A method of controlling an optical storage interface (ODP) that comprises:
- a lens module (LM) for forming a light spot (SP) on an optical information carrier (DSK) in response to a light beam (BO) that is projected on the lens module (LM) ; and
- a lens actuator (LA) for moving the lens module (LM) from a rest position, which is relatively distant from the optical information carrier (DSK), to a read position, which is relatively close to the optical information carrier (DSK),
the method comprising:
- a velocity verification step (S4) in which a controller (CTRL) verifies whether the lens module (LM), when moving from the rest position to the read position, has a velocity that is below a velocity threshold (THV) or not and, if not, causes the lens actuator (LA) to pull back the lens module (LM) with respect to the optical information carrier (DSK).

11. A computer program product (LCP) for an optical storage interface (ODP) that comprises:
- a lens module (LM) for forming a light spot (SP) on an optical information carrier (DSK) in response to a light beam (BO) that is projected on the lens module (LM) ; and
- a lens actuator (LA) for moving the lens module (LM) from a rest position, which is relatively distant from the optical information carrier (DSK), to a read position, which is relatively close to the optical information carrier (DSK),
the computer program product (LCP) comprising a set of instructions that, when loaded into the optical storage interface (ODP), causes the optical storage interface (ODP) to carry out the method according to claim 10.

## Patentansprüche

1. Optische Speicherschnittstellenanordnung (ODP), die Folgendes umfasst:
- ein Linsenmodul (LM) zum Erzeugen eines Lichtpunktes (SP) auf einem Informationsträger (DSK) in Reaktion auf ein Lichtbündel (BO), das auf das Linsenmodul (LM) projektiert wird;
- ein Linsenstellglied (LA) zum Verlagern des Linsenmoduls (LM) aus einer Ruhelage, die sich in einem relativen Abstand von dem optischen Informationsträger (DSK) befindet, in eine Leselage, die sich relativ nahe bei dem optischen Informationsträger (DSK) befindet; wobei die optische Speicherschnittstellenanordnung **dadurch gekennzeichnet ist, dass** sie weiterhin Folgendes umfasst:
- einen Controller (CTRL), vorgesehen zum Überprüfen, ob das Linsenmodul (LM), wenn dies sich aus der Ruhelage in die Leselage verlagert, ggf. eine Geschwindigkeit hat, die unterhalb einer Geschwindigkeitsschwelle (THV) liegt, und wenn nicht, dafür zu sorgen, dass das Linsenstellglied (LA) das Linsenmodul (LM) gegenüber dem optischen Informationsträger (DSK) zurückzieht.

2. Optische Speicherschnittstellenanordnung (ODP) nach Anspruch 1, wobei die optische Speicherschnittstelle ein optoelektronisches Gebilde (OEA) umfasst, vorgesehen zum Schaffen eines Sensorsignals (GI), das für einen Luftspalt (AG) zwischen dem Linsenmodul (LM) und dem optischen Informationsträger (DSK) repräsentativ ist, wobei der Controller (CTRL) dazu vorgesehen ist, die Geschwindigkeit des Linsenmoduls (LM) auf Basis des Sensorsignals (GI) zu schätzen.

3. Optische Speicherschnittstellenanordnung (ODP) nach Anspruch 2" wobei das optoelektronische Gebilde (OEA) dazu vorgesehen ist, auf Basis des an dem optischen Informationsträger (DSK) reflektierten Lichtes, dessen Polarisation senkrecht auf der des auf das Linsenmodul (LM) projektierten Lichtbündels (BO) steht, das Sensorsignal (GI) zu schaffen, und zwar zum Bilden des Lichtpunktes (SP).

4. Optische Speicherschnittstellenanordnung (ODP) nach Anspruch 2, wobei der Controller (CTRL) Folgendes umfasst:
- einen Analog-Digital-Wandler (AD1), derart gekoppelt, dass dieser in Reaktion auf das Sensorsignal (GI) einen Strom digitaler Eingangswerte (GID) schafft; und
- einen Prozessor (PRC), vorgesehen zum Schätzen der Geschwindigkeit des Linsenmoduls (LM) auf Basis einer Differenz zwischen zwei digitalen Werten (GID), festgestellt zu verschiedenen Zeitpunkten.

5. Optische Speicherschnittstellenanordnung (ODP) nach Anspruch 1, wobei der Controller (CTRL) dazu vorgesehen ist, in einer "offenen Schleifenbetriebsart" (OLM) zu arbeiten, worin der Controller (CTRL) dafür sorgt, dass das Linsenstellglied (LA) das Linsenmodul (LM) aus der Ruhelage in eine Übergabelage verlagert, die sich zwischen der Ruhelage und der Leselage befindet, und dazu vorgesehen ist, daraufhin in einer "geschlossenen Schleifenbetriebsart" (HOM, FRM) zu arbeiten, worin der Controller (CTRL) und das Linsenstellglied (LA) einen Teil einer Rückkopplungsschleife bilden, die einen Bezugswert (REF) empfängt, der eine gewünschte Lage des Linsenmoduls (LM) definiert.

6. Optische Speicherschnittstellenanordnung (ODP) nach Anspruch 5, wobei der Controller (CTRL) dazu vorgesehen ist, den Bezugswert (REF) auf einen Anfangswert (REF₀) zu setzen, wenn der Controller (CTRL) aus der offenen Schleifenbebtriebsart (OLM) in die geschlossene Schleifenbetriebsart (HOM, FRM) umschaltet, und den Bezugswert (REF) während einer Übergabeperiode allmählich auf einen Endwert (REF_{E}) zu bringen, wobei der Anfangswert (REF₀) eine gewünschte Lage definiert, die sich zwischen der Übergabelage und der Leselage befindet, wobei der Endwert (REF_{E}) eine gewünschte Lage definiert, die der Leselage entspricht.

7. Optische Speicherschnittstellenanordnung (ODP) nach Anspruch 6, wobei der Controller (CTRL) dazu vorgesehen ist, den Bezugswert (REF) entsprechend der Übergabefunktion (H[.]) auf Basis einer gemessenen Lage (GI) und einer gemessenen Geschwindigkeit (ΔGI) des Linsenmoduls (LM) zu variieren, wenn der Controller (CTRL) aus der offenen Schleifenbetriebsart (OLM) in die geschlossene Schleifenbetriebsart (HOM, FRM) umschaltet.

8. Optische Speicherschnittstellenanordnung (ODP) nach Anspruch 6, wobei der Controller (CTRL) dazu vorgesehen ist, zu überprüfen, ob eine absolute Differenz zwischen dem Bezugswert (REF) und einem Signal (GI), das für einen Luftspalt (AG) zwischen dem Linsenmodul (LM) und dem optischen Informationsträger (DSK) repräsentativ ist, ggf. unterhalb einer Fehlerschwelle (THE) liegt, und, wenn nicht, dafür zu sorgen, dass das Linsenstellglied (LA) das Linsenmodul (LM) gegenüber dem optischen Informationsträger (DSK) zurückzieht.

9. Optische Speicherschnittstellenanordnung (ODP) nach Anspruch 1, wobei das Linsenmodul (LM) eine Nanolinse ("solid immersion lens") aufweist.

10. Verfahren zum Steuern einer optischen Speicherschnittstelle (ODP), die Folgendes umfasst:
- ein Linsenmodul (LM) zum Erzeugen eines Lichtpunktes (SP) auf einem Informationsträger (DSK) in Reaktion auf ein Lichtbündel (BO), das auf das Linsenmodul (LM) projektiert wird;
- ein Linsenstellglied (LA) zum Verlagern des Linsenmoduls (LM) aus einer Ruhelage, die sich in einem relativen Abstand von dem optischen Informationsträger (DSK) befindet, in eine Leselage, die sich relativ nahe bei dem optischen Informationsträger (DSK) befindet; wobei das Verfahren den nachfolgenden Verfahrensschritt umfasst:
- einen Geschwindigkeitsüberprüfungsschritt (S4), in dem ein Controller (CTRL) überprüft, ob das Linsenmodul (LM), wenn dies sich aus der Ruhelage in die Leselage verlagert, ggf. eine Geschwindigkeit hat, die unterhalb einer Geschwindigkeitsschwelle (THV) liegt, und wenn nicht, dafür sorgt, dass das Linsenstellglied (LA) das Linsenmodul (LM) gegenüber dem optischen Informationsträger (DSK) zurückzieht.

11. Computerprogrammprodukt (LCP) für eine optische Speicherschnittstelle (ODP), die Folgendes umfasst:
- ein Linsenmodul (LM) zum Erzeugen eines Lichtpunktes (SP) auf einem Informationsträger (DSK) in Reaktion auf ein Lichtbündel (BO), das auf das Linsenmodul (LM) projektiert wird;
- ein Linsenstellglied (LA) zum Verlagern des Linsenmoduls (LM) aus einer Ruhelage, die sich in einem relativen Abstand von dem optischen Informationsträger (DSK) befindet, in eine Leselage, die sich relativ nahe bei dem optischen Informationsträger (DSK) befindet; wobei das Computerprogrammprodukt (LCP) einen Satz Instruktionen aufweist, die, wenn in die optische Speicherschnittstelle (ODP) geladen, dafür sorgen, dass die optische Speicherschnittstelle das Verfahren nach Anspruch 10 durchführt.

## Revendications

1. Appareil d'interface de mémoire optique (ODP) comprenant :
- un module d'objectif (LM) pour la formation d'un spot lumineux sur un support optique d'information (DSK) en réponse à un faisceau lumineux (BO) qui est projeté sur le module d'objectif (LM) ;
- un actionneur d'objectif (LA) pour le déplacement du module d'objectif (LM) à partir d'une position de repos qui est relativement éloignée du support optique d'information (DSK) à une position de lecture qui se situe relativement proche du support optique d'information (DSK), l'appareil d'interface de mémoire optique étant **caractérisé en ce qu'**il comprend encore :
- un contrôleur (CTRL) qui est agencé de manière à vérifier si le module d'objectif (LM), lors du déplacement à partir de la position de repos à la position de lecture, présente une vitesse qui se situe au-dessous d'un seuil de vitesse (THV) ou pas et, si cela n'est pas le cas, de manière à effectuer que l'actionneur d'objectif (LA) retire le module d'objectif (LM) par rapport au support optique d'information (DSK).

2. Appareil d'interface de mémoire optique (ODP) selon la revendication 1, l'interface de mémoire optique comprenant un ensemble optoélectronique (OEA) qui est agencé de manière à fournir un signal de détection (GI) étant représentatif d'un entrefer (AG) entre le module d'objectif (LM) et le support optique d'information (DSK), le contrôleur (CTRL) étant agencé de manière à estimer la vitesse du module d'objectif (LM) sur la base du signal de détection (GI).

3. Appareil d'interface de mémoire optique (ODP) selon la revendication 2, l'ensemble optoélectronique (OEA) étant agencé de manière à fournir le signal de détection (GI) sur la base de lumière réfléchie à partir du support optique d'information (DSK) qui présente une polarisation étant perpendiculaire au faisceau lumineux (BO) qui est projeté sur le module d'objectif (LM) pour la formation du spot lumineux (SP).

4. Appareil d'interface de mémoire optique (ODP) selon la revendication 2, le contrôleur (CTRL) comprenant :
- un convertisseur analogique-numérique (AD1) qui est couplé de manière à fournir un flux de valeurs d'entrée numériques (GID) en réponse au signal de détection (GI) ; et
- un processeur (PRC) qui est agencé de manière à estimer la vitesse du module d'objectif (LM) sur la base d'une différence entre deux valeurs d'entrée numériques (GID) qui est établie à des instants différents.

5. Appareil d'interface de mémoire optique (ODP) selon la revendication 1, le contrôleur (CTRL) étant agencé de manière à fonctionner dans un mode de boucle ouverte (OLM) dans lequel le contrôleur (CTRL) effectue que l'actionneur d'objectif (LA) se déplace vers le module d'objectif (LM) à partir de la position de repos à une position de transfert qui se situe entre la position de repos et la position de lecture, et étant agencé de manière à fonctionner ensuite dans un mode de boucle fermée (HOM, FRM) dans lequel le contrôleur (CTRL) et l'actionneur d'objectif (LA) font partie d'une boucle de rétroaction qui reçoit une référence (REF) qui définit une position souhaitée du module d'objectif (LM).

6. Appareil d'interface de mémoire optique (ODP) selon la revendication 5, le contrôleur (CTRL) étant agencé de manière à régler la référence (REF) à une valeur initiale (REF₀) lorsque le contrôleur (CTRL) passe du mode de boucle ouverte (OLM) au mode de boucle fermée (HOM, FRM) et de manière à amener graduellement la référence (REF) à une valeur finale (REF_{E}) au cours d'une période de transfert, la valeur initiale (REF₀) définissant une position souhaitée qui se situe entre la position de transfert et la position de lecture, la valeur finale (REF_{E}) définissant une position souhaitée qui correspond à la position de lecture.

7. Appareil d'interface de mémoire optique (ODP) selon la revendication 6, le contrôleur (CTRL) étant agencé de manière à faire varier la référence (REF) selon une fonction de transfert (H[.]) sur la base d'une position mesurée (GI) et d'une vitesse mesurée (ΔGI) du module d'objectif (LM) lorsque le contrôleur (CTRL) passe du mode de boucle ouverte (OLM) au mode de boucle fermée (HOM, FRM).

8. Appareil d'interface de mémoire optique (ODP) selon la revendication 6, le contrôleur (CTRL) étant agencé de manière à vérifier si une différence absolue entre la référence (REF) et un signal (GI) qui est représentatif d'un entrefer (AG) entre le module d'objectif (LM) et le support optique d'information (DSK) se situe au-dessous d'un seuil d'erreur (THE) et, si cela n'est pas le cas, de manière à effectuer que l'actionneur d'objectif (LA) retire le module d'objectif (LM) par rapport au support optique d'information (DSK).

9. Appareil d'interface de mémoire optique (ODP) selon la revendication 1, dans lequel le module d'objectif (LM) comprend un objectif solide à immersion.

10. Procédé de commande d'une interface de mémoire optique (ODP) qui comprend :
- un module d'objectif (LM) pour la formation d'un spot lumineux (SP) sur un support optique d'information (DSK) en réponse à un faisceau lumineux (BO) qui est projeté sur le module d'objectif (LM) ; et
- un actionneur d'objectif (LA) pour le déplacement du module d'objectif (LM) à partir d'une position de repos qui est relativement éloignée du support optique d'information (DSK) à une position de lecture qui se situe relativement proche du support optique d'information (DSK),
le procédé comprenant :
- une étape de vérification de vitesse (S4) dans laquelle un contrôleur (CTRL) vérifie si le module d'objectif (LM), lors du déplacement à partir de la position de repos à la position de lecture, présente une vitesse qui se situe au-dessous d'un seuil de vitesse (THV) ou pas et, si cela n'est pas le cas, effectue que l'actionneur d'objectif (LA) retire le module d'objectif (LM) par rapport au support optique d'information (DSK).

11. Produit de programme informatique (LCP) pour une interface de mémoire optique (ODP) qui comprend :
- un module d'objectif (LM) pour la formation d'un spot lumineux (SP) sur un support optique d'information (DSK) en réponse à un faisceau lumineux (BO) qui est projeté sur le module d'objectif (LM) ; et
- un actionneur d'objectif (LA) pour le déplacement du module d'objectif (LM) à partir d'une position de repos qui est relativement éloignée du support optique d'information (DSK) à une position de lecture qui se situe relativement proche du support optique d'information (DSK),
le produit de programme informatique (LCP) comprenant un ensemble d'instructions qui effectue, lorsqu'il est chargé dans l'interface de mémoire optique (ODP), que l'interface de mémoire optique (ODP) met en oeuvre le procédé selon la revendication 10.
